# EUROPEAN PATENT SPECIFICATION

(11) **EP 1 407 928 B1**
(45) Date of publication and mention of the grant of the patent: **03.03.2010**
(21) Application number: 01970192.9
(22) Date of filing: 21.09.2001
(51) Int. Cl.: B60N 3/04, B60R 13/01

(54) **STRUCTURE FOR ARRANGING EXTENSION MAT OF AUTOMOBILE**
KONSTRUKTION ZUR ANORDNUNG EINER VERLÄNGERUNGSMATTE FÜR EIN KRAFTFAHRZEUG
STRUCTURE D'INSTALLATION D'UN TAPIS D'EXTENSION POUR AUTOMOBILES

(30) Priority: 12.06.2001 JP 2001176860
(43) Date of publication of application: 14.04.2004
(73) Proprietor: Honda Access Corporation, Niiza-shi, Saitama 352-0011 (JP)
(72) Inventor: MATSUOKA, Toshihide, c/o HONDA ACCESS CORPORATION, Niiza-shi, Saitama 352-0011 (JP); KOBAYASHI, Daisuke, c/o HONDA ACCESS CORPORATION, Niiza-shi, Saitama 352-0011 (JP)
(74) Representative: Cheyne, John Robert Alexander M.
(86) International application number: PCT/JP2001/008259
(87) International publication number: WO 2003/008231

(56) References cited:
- DE-A1- 19 940 629
- JP-A- 61 232 939
- JP-U- 2 023 232
- JP-U- 2 139 127
- US-A- 5 011 210

## Description

### FIELD OF THE INVENTION

The present invention relates to an improvement an extension mat layout structure in an automobile, in which an extension mat is attached to back faces of seat backs capable of being brought into forward-fallen states in which the seat backs are superposed on seat cushions, the extension mat being, in its forward-fallen state, substantially continuous to a baggage compartment mat laid on a floor in a baggage compartment that is defined in a rear portion of the automobile.

### BACKGROUND ART

Such an extension mat layout structure in the automobile is already known as disclosed in, for example, Japanese Patent Application Laid-open No.2001-18730.

In an automobile, in general, a carpet is laid on a floor in an occupant compartment. If a plant, a collapsible bicycle or the like liable to stain the floor is placed on the floor, then a newspaper or the like is laid extemporaneously on the carpet to prevent the staining of the carpet. If an occupant has no newspaper or the like for preventing the staining, the plant, collapsible bicycle or the like is inevitably placed directly on the carpet.

DE 19940629 discloses a lining kit comprising a seat cover which attaches, by means of velcro elements, to the rear surface of the seat back of a rear bench seat.

JP 61232939 discloses a carpet for a luggage section of a car having a rear part spread over the floor panel of a luggage compartment and a front part spread over an under panel below a rear seat cushion. The end of the front part is folded around a pipe-like shaft which protrudes from the respective edges of the carpet. The protruding portions of the shaft engage with lock parts formed in the front part of a luggage side finisher.

US 5011210 concerns a structure for fixing a carpet to the rear side of a seat back by way of engaging a T-shaped anchor member with a recessed area formed in the seat back, the anchor member being connected with the end of a covering member associated with the seat back.

### DISCLOSURE OF THE INVENTION

The present invention has been accomplished with such circumstances in view, and it is an object of the present invention to provide an extension mat layout structure of the above-described type in an automobile, wherein when a plant, a collapsible bicycle or the like liable to stain the floor is placed on the floor in the occupant compartment, the extension of the mat can be rationally utilized to prevent the staining of the floor in the occupant compartment.

To achieve the above object, according to a first aspect and feature of the present invention as defined in claim 1, there is provided an extension mat layout structure in an automobile having a baggage compartment mat laid on a floor section in a baggage compartment defined in a rear portion of the automobile, the structure comprising an extension mat which is attachable to and detachable from back faces of seat backs capable of being brought into a forward-fallen state in which said seat backs are superposed on seat cushions, the extension mat being, in its forward-fallen state, substantially continuous to the baggage compartment mat said extension mat being formed of such a size that said extension mat can cover a floor section in the occupant compartment in a region from lower portions of the seat cushions to a footrest space in front of said seat cushions.

With the first feature of the invention as defined in claim 1, when the seat cushions are raised up rearwards or removed to make a baggage-placement space above the floor section in the occupant compartment, the extension mat is removed from the seat backs and laid on the floor section in the baggage-placement space, whereby the entire floor in the baggage-placement space can be covered with the extension mat. Therefore, it is possible to prevent the staining of the floor by a piece of baggage.

Further features of the invention are disclosed in the dependent claims.

According to a second aspect and feature of the present invention, in addition to the first feature, the extension mat is divided into left and right mat halves in correspondence to the seat cushions and the seat backs respectively divided laterally, so that the mat halves can be connected to each other by a fastener.

With the second feature, the extension mat is divided into the left and right mat halves. Therefore, when only one of the left and right seat cushions is raised up rearwards or removed to make a baggage-placement space above one side of the floor section in the occupant compartment, the relative narrow floor section in the baggage-placement space can be rationally covered without spoiling appearance by laying only one of the left and right mat halves on the floor section in the baggage-placement space.

On the other hand, when both of the left and right seat cushions are raised up rearwards or removed to make a baggage-placement space over the entire lateral width of the occupant compartment, both of the mat halves can be connected to each other by the fastener to form a single large-sized extension mat, and the large-sized extension mat can be laid on the floor section in the baggage-placement space, thereby rationally covering the relatively wide floor section in the baggage-placement space all over.

According to a third aspect and feature of the present invention, in addition to the first or second feature, the extension mat is formed of a waterproof material.

With the third feature, when the extension mat is stained, it can be removed to the outside of the vehicle and easily washed with water and as a result, is kept clean.

The floor section in the occupant compartment and the floor section in the baggage compartment correspond to a lower floor section 1a and a higher floor section 1b, respectively, in an embodiment of the present invention, which will be described hereinafter.

### BRIEF DESCRIPTION OF THE DRAWINGS

Fig.1 is a vertical sectional side view of an essential portion of an automobile having an extension mat layout structure according to the present invention;
Fig.2 is a perspective view of a rear portion of the extension mat layout structure;
Fig.3 is similar to Fig.1, but showing the extension mat layout structure in a service state;
Fig.4 is a perspective view corresponding to Fig.3, but showing the rear portion;
Fig. 5 is a view similar to Fig.1, but showing the extension mat layout structure in another service state;
Fig.6 is a perspective view corresponding to Fig.5, but showing a front portion; and
Fig.7 is a view similar to Fig.6, but showing the extension mat layout structure in a further service state.

### BEST MODE FOR CARRYING OUT THE INVENTION

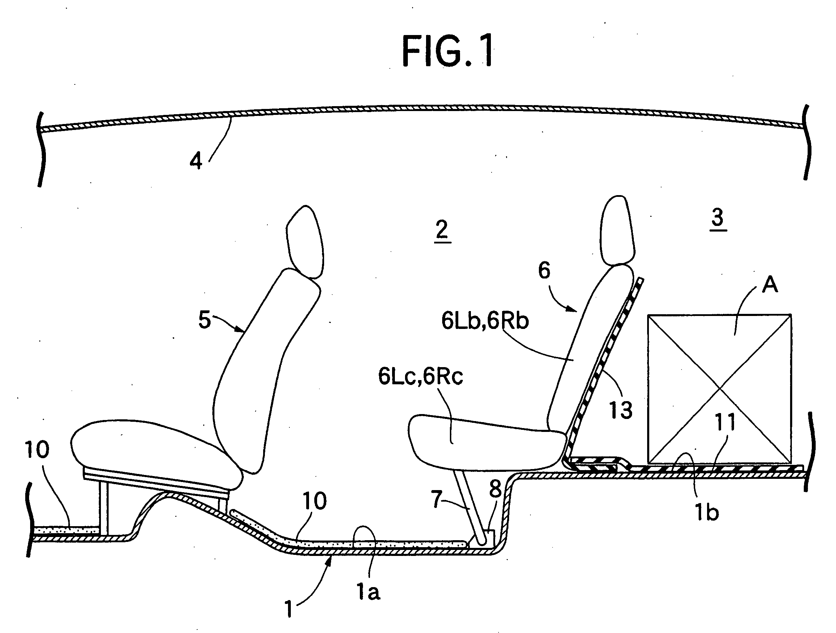

The mode for carrying out the present invention will be described hereinafter by way of an embodiment shown in Figs.1 to 7.

Referring first to Fig.1, in an automobile shown in Fig.1, an occupant compartment 2 and a baggage compartment 3 connected to a rear portion of the occupant compartment 2 are covered with a common roof 4, as in a wagon or an RV-type vehicle. A floor 1 of the automobile comprises a lower floor section 1a corresponding to the occupant compartment 2, and a higher floor section 1b corresponding to the baggage compartment 3 and higher in level than the lower floor section 1a. A front seat arrangement 5 and a rear seat arrangement 6 are disposed in a longitudinal arrangement on the lower floor section 1a.

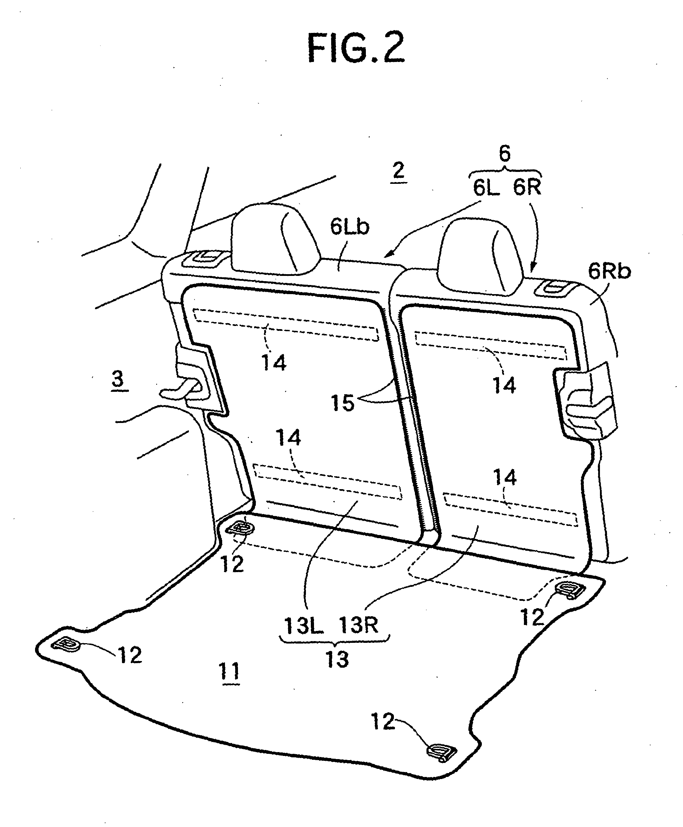

As shown in Figs. 2, 4, 6 and 7, the rear seat arrangement 6 adjoining the baggage compartment 3 is divided at a ratio of 6:4 over a lateral width into a left rear seat 6L and a right rear seat 6R which function individually. Each of seat cushions 6Lc and 6Rc of the left and right rear seats 6L and 6R includes a support leg 7 capable of being folded down to a front end. In a usual service state, the support leg 7 is raised up to engage a locking portion 8 of the lower floor section 1a and to support a rear end of the corresponding seat cushion 6Lc, 6Rc on the higher floor section 1b. When the support legs 7 are folded down, the seat cushions 6Lc and 6Rc can be moved individually onto the lower floor section 1a.

The left and right rear seats 6L and 6R include seat backs 6Lb and 6Rb, which are mounted on the higher floor section 1b through support arms 9, so that they can be fallen forwards.

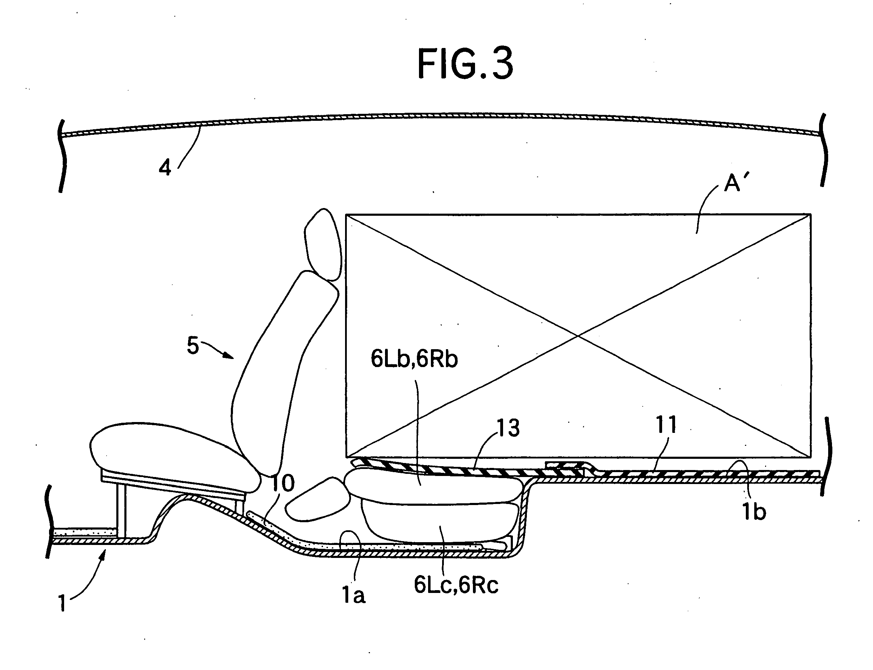

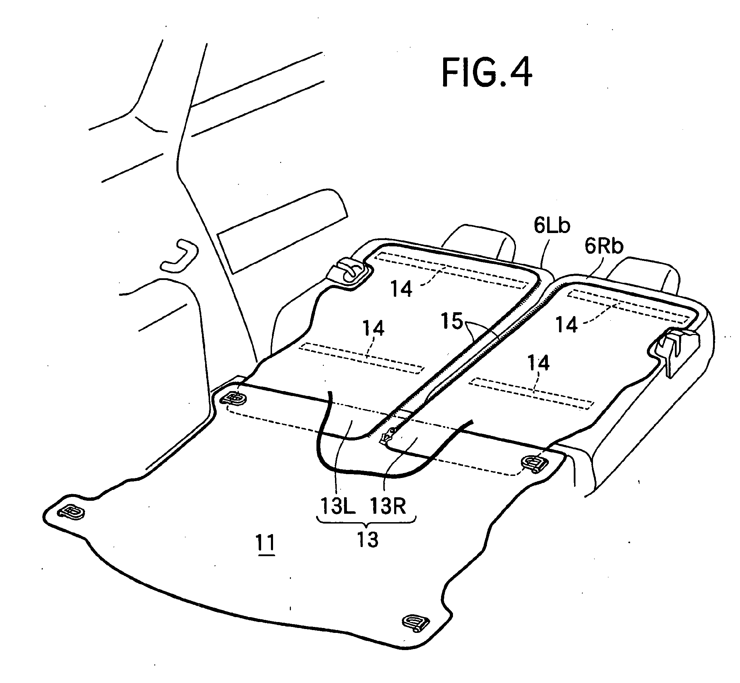

In each of the rear seats 6L and 6R, the seat back 6Lb, 6Rb can be fallen forwards and superposed onto the corresponding seat cushion 6Lc, 6Rc, and the seat cushion 6Lc, 6Rc can be moved onto the lower floor section 1a, as shown in Figs.3 and 4. In such state, a back of the seat back 6Lb, 6Rb fallen horizontally is substantially continuous to an upper surface of the higher floor section 1b. If either one or both of the left and right rear seats 6L and 6R are folded down, a space above the forward-fallen seat backs 6Lb and 6Rb functions as an extension of the baggage compartment 3 to enlarge the baggage compartment 3 longitudinally. Therefore, a large-sized piece of baggage A' can be accommodated to extend over the baggage compartment 3 and the seat backs 6Lb and 6Rb fallen forwards.

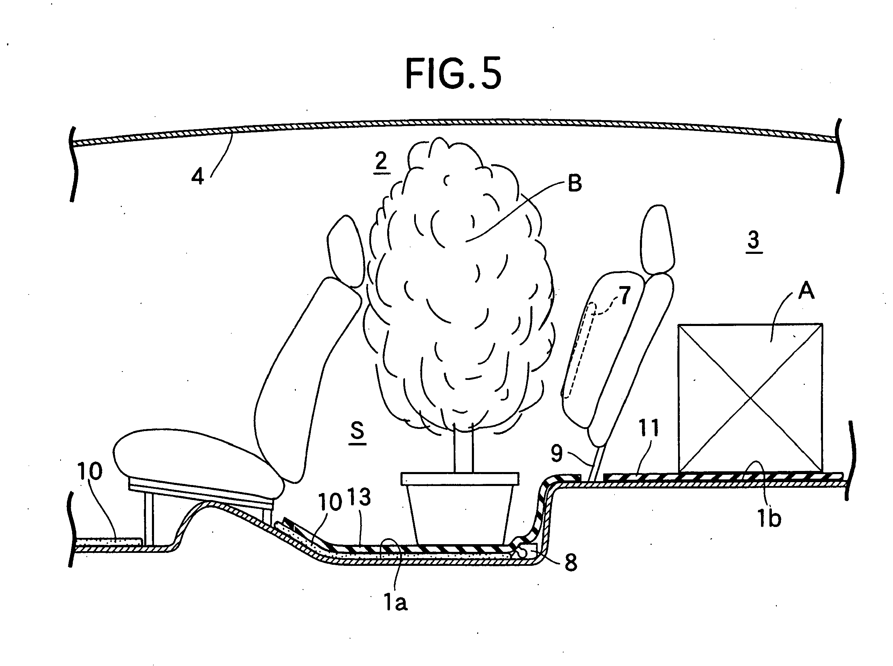

If the seat cushion or cushions 6Lc and 6Rc of either one or both of the left and right rear seats 6L and 6R is or are raised up rearwards and superposed onto the corresponding seat backs 6Lb and 6Rb and the support legs 7 are folded down, as shown in Figs.5 to 7, a baggage-placement space S larger than the higher floor section 1b in height to the roof 4 can be formed above the lower floor section 1a and hence, a piece of baggage B having a large height such as a plant can be accommodated in the space S.

As shown in Fig.1, a carpet 10 is laid on an area of the lower floor section 1a corresponding to the occupant compartment 2, and a baggage compartment mat 11 made of a water-proof material such as a rubber and a synthetic resin is laid on an area of the higher floor section 1b corresponding to the baggage compartment 3. In Fig.2, reference character 12 is a hook mounted on the higher floor section 1b for inhibiting the movement of the baggage compartment mat 11.

On the other hand, an extension mat 13 made of a waterproof material, as is the baggage compartment mat 11, is attached to back faces of the seat backs 6Lb and 6Rb of the left and right rear seats 6. The extension mat 13 is divided into a left mat half 13L and a right mat half 13R detachably attached individually to the back faces of the left and right seat backs 6Lb and 6Rb through a plurality of face fasteners 14. Each of the mat halves 13L and 13R is formed at a size such that it covers the substantially entire back face of the corresponding the seat back 6Lb, 6Rb, and its rear end is superposed onto the baggage compartment mat 11. When the rear end of each of the mat halves 13L and 13R is superposed onto the baggage compartment mat 11, each of the mat halves 13L and 13R is disposed under the baggage compartment mat 11, so that they can be moved relative to each other.

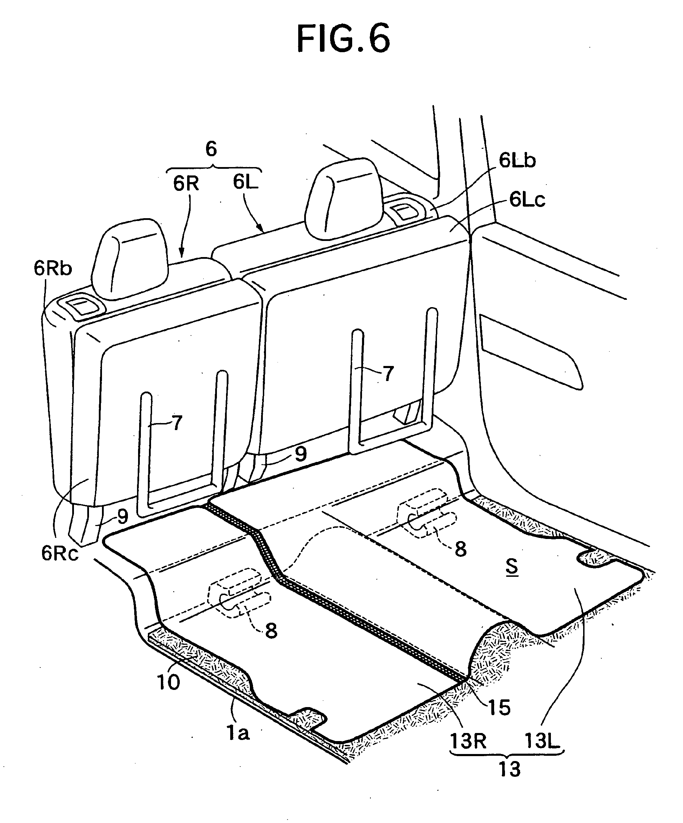

A slide fastener 15 is mounted between the left and right mat halves 13L and 13R for connecting opposed edges of the left and right mat halves 13L and 13R to each other when the mat halves 13L and 13R have been removed from the seat backs 6Lb and 6Rb. The single large-sized extension mat 13 formed by the connection of the mat halves 13L and 13R is formed at a size ensuring that it can cover the lower floor section 1a in a region from lower portions of the left and right seat cushions 6Lc and 6Rc to a footrest space in front of the seat cushions 6Lc and 6Rc, as shown in Fig.6.

The operation of the embodiment will be described below.

The extension mat 13 is usually attached to the back faces of the seat backs 6Lb and 6Rb of the left and right rear seats 6L and 6R by the face fastener 14, as shown in Figs.1 and 2 to face the baggage compartment 3. Therefore, even if a piece of baggage A accommodated in the baggage compartment 3 touches the back faces of the seat backs 6Lb and 6Rb, it is possible to prevent the staining of the seat backs 6Lb and 6Rb by the mat halves 13L and 13R.

If either one or both of the left and right rear seats 6L and 6R are folded down and received on the lower floor section 1a, as shown in Figs. 3 and 4, the mat halves 13L and 13R on the back faces of the forward-fallen seat backs 6Lb and 6Rb are brought into horizontal attitudes and substantially continuous to the baggage compartment mat 11. Therefore, a large-size piece of baggage A' such as a bicycle can be placed on the baggage compartment mat 11 and the extension mat 13. In this case, the mat halves 13L and 13R contribute to the prevention of the staining of the seat backs 6Lb and 6Rb by the piece of baggage A'.

When the rear seats 6L and 6R are folded down or moved, the mat halves 13L and 13R may be pulled slightly forwards in some cases, but even in such a case, an unreasonable pulling force can be prevented from being applied to each of the mat halves 13L and 13R, because the superposed portions of the mat halves 13L and 13R and the baggage compartment mat 11 are movable to each other.

When both of the seat cushions 6Lc and 6Rc of the left and right rear seats 6L and 6R are raised up and all the support legs 7 are folded down to make a baggage-placement space S having a largest height and a largest width above the lower floor section 1a, as shown in Figs.5 and 6, the mat halves 13L and 13R are removed from both of the left and right seat backs 6Lb and 6Rb and are connected to each other by the slide fastener 15 to form the single large-sized extension mat 13, and the large-sized extension mat 13 is laid on the lower floor section 1a in the largest baggage-placement space S. If such operation is carried out, not only the carpet 10 on the relatively wide lower floor section 1a in the baggage-placement space S but also all the locking portions 8 can be covered in a gapless manner with the large-sized extension mat 13. Therefore, when a piece of baggage B is placed on the large-sized extension mat 13, it is possible not only to reliably prevent the staining of the lower floor section 1a, i.e., the carpet 10 by the piece of baggage B, but also to avoid the interference of the piece of baggage B and the exposed locking portions 8 with each other.

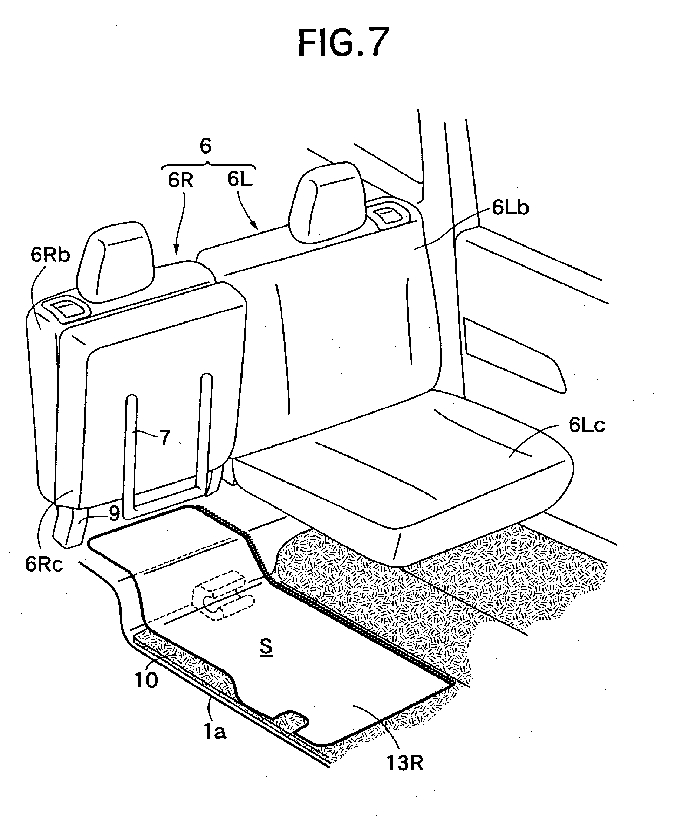

As is shown in Fig.7, when only any one of the left and right seat cushions 6Lc and 6Rc is raised up rearwards and the corresponding support legs 7 are folded down to make the baggage-placement space S on either left or right side of the lower floor section 1a, the mat half 13L or 13R is removed from one of the left and right seat backs 6Lb and 6Rb and laid on the lower floor section 1a in the baggage-placement space S. If such operation is carried out, the carpet 10 and the exposed locking portions 8 in the relatively narrow floor section 1a in the baggage-placement space S can be covered beautifully with the mat half 13L or 13R. In this case, therefore, it is possible to reliably prevent the staining of the lower floor section 1a, i.e., the carpet 10 by the piece of baggage B, and to avoid the interference of the piece of baggage B and the exposed locking portions 8 with each other. In this case, an occupant can sit down on the other rear seat 6L or 6R in a service state alongside of the piece of baggage B and hence, the reduction in residence space for the occupant can be suppressed to the minimum.

Only any one of the left and right mat halves 13L and 13R may be used or the large-sized extension mat 13 comprising the mat halves 13L and 13R connected to each other may be used in accordance with the extent of the baggage-placement space S made in the occupant compartment 2 to rationally cover the lower floor section 1a in the baggage-placement space S, and the beauty of the baggage-placement space S can be always maintained.

The extension mat 13 is made of the waterproof material and hence, when the extension mat 13 is stained, it can be removed to the outside of the vehicle and easily washed with water and thus extremely kept clean.

The present invention is not limited to the above-described embodiment, and various modifications in design may be made without departing from the subject matter of the invention as defined in the claims. For example, the ratio of lateral division of the rear seat 6 can be set at any value such as 5:5. In addition, any of a hook and a button may be used in place of the slide fastener 15. The present invention is also applicable to a structure in which the seat cushions 6Lc and 6Rc of the rear seats 6L and 6R are disposed removably.

## Claims

1. An extension mat layout structure in an automobile having a baggage compartment mat(11) laid on a floor section (1b) in a baggage compartment (3) defined in a rear portion of the automobile, the structure comprising an extension mat (13) which is attachable to and detachable from back faces of seat backs (6Lb, 6Rb) capable of being brought into a forward-fallen state in which said seat backs are superposed on seat cushions (6Lc, 6Rc), the extension mat (13) being, in its forward-fallen state, substantially continuous to the baggage compartment mat (11) said extension mat (13) being formed of such a size that said extension mat (13) can cover a floor section (1a) in the occupant compartment (2) in a region from lower portions of the seat cushions (6Lc, 6Rc) to a footrest space in front of said seat cushions (6Lc, 6Rc).

2. An extension mat layout structure in an automobile according to claim 1, wherein said extension mat (13) is divided into left and right mat halves (13L and 13R) in correspondence to said seat cushions (6Lc, 6Rc) and said seat backs (6Lb, 6Rb) respectively divided laterally, so that said mat halves (13L, 13R) can be connected to each other by a fastener (15).

3. An extension mat layout structure in an automobile according to claim 1 or 2, wherein said extension mat (13) is formed of a waterproof material.

## Patentansprüche

1. Verlängerungsmatten-Anordnungsstruktur in einem Automobil mit einer Kofferraummatte (11), die auf einen Bodenabschnitt (1 b) in einem Kofferraum (3) gelegt ist, der in einem hinteren Bereich des Automobils definiert ist, wobei die Struktur eine Verlängerungsmatte (13) umfasst, welche an Rückseiten von Sitzrückenlehnen (6Lb, 6Rb) anbringbar und von diesen lösbar ist, die geeignet sind, in einen nach vorne geklappten Zustand gebracht zu werden, in welchem die Sitzrückenlehnen auf Sitzpolstern (6Lc, 6Rc) liegend angeordnet sind, wobei die Verlängerungsmatte (13) in ihrem nach vorne geklappten Zustand im Wesentlichen kontinuierlich zu der Kofferraummatte (11) ist, wobei die Verlängerungsmatte (13) von einer derartigen Größe geformt ist, dass die Verlängerungsmatte (13) einen Bodenabschnitt (1a) in dem Passagierraum (2) in einem Gebiet von niedrigeren Bereichen von den Sitzpolstern (6Lc, 6Rc) zu einem Fußraum vor den Sitzpolstern (6Lc, 6Rc) bedecken kann.

2. Verlängerungsmatten-Anordnungsstruktur in einem Automobil nach Anspruch 1, wobei die Verlängerungsmatte (13) in eine linke und eine rechte Mattenhälfte (13L und 13R) geteilt ist, in Übereinstimmung mit den Sitzpolstern (6Lc, 6Rc) und den Sitzrückenlehnen (6Lb, 6Rb), die jeweils seitlich geteilt sind, so dass die Mattenhälften (13L, 13R) miteinander durch eine Befestigung (15) verbunden werden können.

3. Verlängerungsmatten-Anordnungsstruktur in einem Automobil nach Anspruch 1 oder 2, wobei die Veriängerungsmatte (13) aus einem wasserfesten Material gebildet ist.

## Revendications

1. Structure d'agencement de tapis d'extension dans une automobile ayant un tapis de compartiment de bagages (11) posé sur une section de plancher (1b) dans un compartiment de bagages (3) défini dans une partie arrière de l'automobile, la structure comprenant un tapis d'extension (13) qui peut être fixé à et détaché des faces arrière des dossiers de siège (6Lb, 6Rb), pouvant être amené dans un état replié vers l'avant dans lequel lesdits dossiers de siège sont superposés sur les coussins de siège (6Lc, 6Rc), le tapis d'extension (13) étant, dans son état replié vers l'avant, sensiblement continu par rapport au tapis de compartiment de bagages (11), ledit tapis d'extension (13) étant formé de sorte qu'une taille dudit tapis d'extension (13) peut recouvrir une section de plancher (1a) dans le compartiment des occupants (2) dans une région allant des parties inférieures des coussins de siège (6Lc, 6Rc) jusqu'à l'espace de repose-pied en face desdits coussins de siège (6Lc, 6Rc).

2. Structure d'agencement de tapis d'extension dans une automobile selon la revendication 1, dans laquelle ledit tapis d'extension (13) est divisé en moitiés de tapis gauche et droite (13L et 13R) en correspondance avec lesdits coussins de siège (6Lc, 6Rc) et lesdits dossiers de siège (6Lb, 6Rb) divisés respectivement latéralement, de sorte que lesdites moitiés de tapis (13L, 13R) peuvent être raccordées entre elles par une fixation (15).

3. Structure d'agencement de tapis d'extension dans une automobile selon la revendication 1 ou 2, dans laquelle ledit tapis d'extension (13) est formé d'un matériau étanche à l'eau.
